# EUROPEAN PATENT APPLICATION

(11) **EP 4 564 476 A1**
(43) Date of publication of application: **04.06.2025**
(21) Application number: 23846638.7
(22) Date of filing: 27.07.2023
(51) Int. Cl.: H01M 4/485, C01G 23/04

(54) **NEGATIVE ELECTRODE ACTIVE MATERIAL FOR LITHIUM-ION SECONDARY BATTERIES, METHOD FOR PRODUCING NEGATIVE ELECTRODE ACTIVE MATERIAL FOR LITHIUM-ION SECONDARY BATTERIES, AND LITHIUM-ION SECONDARY BATTERY**

(30) Priority: 28.07.2022 JP 2022120914
(71) Applicant: SUMITOMO METAL MINING CO., LTD., Tokyo 105-8716 (JP)
(72) Inventor: AIDA, Taira, Niihama-shi, Ehime 792-0002 (JP)
(74) Representative: Jones, Nicholas Andrew
(86) International application number: PCT/JP2023/027649
(87) International publication number: WO 2024/024908

(57) **Abstract**

A negative electrode active material is provided for a lithium ion secondary battery. The negative electrode active battery is represented by a general formula: Li₄Ti₅O₁₂₋ₓMₓ wherein the x satisfies 0<x<12, and the element M is an element having an electronegativity lower than that of oxygen.

## Description

### TECHNICAL FIELD

The present invention relates to a negative electrode active material for a lithium ion secondary battery, a method of manufacturing a negative electrode active material for a lithium ion secondary battery, and a lithium ion secondary battery.

### BACKGROUND ART

In recent years, with the spread of small-size information terminals, such as smartphones and tablet PCs, the development of small-size and lightweight secondary batteries with a high energy density is strongly desired. In addition, the development of high output secondary batteries as batteries for electric vehicles, such as hybrid vehicles is strongly desired.

A lithium-ion secondary battery is a secondary battery that satisfies such requirements. A lithium-ion secondary battery is composed of a negative electrode and a positive electrode, an electrolyte, and the like, and a material from which lithium can desorb and into which lithium can be inserted is used as the active material of the negative electrode and the positive electrode.

Generally, graphite is used as the negative electrode of a lithium-ion secondary battery. However, since the oxidoreduction potential of graphite is very close to that of lithium, conductive lithium metal may precipitate on the graphite negative electrode and short-circuit across the negative electrode and the positive electrode may occur, especially during charging at a high power.

Therefore, use of lithium titanate (Li₄Ti₅O₁₂), which has an oxidoreduction potential higher than that of graphite, as the active material of the negative electrode has been studied (for example, see PTL 1).

### CITATION LIST

### PATENT LITERATURE

PTL 1: Japanese Translation of PCT International Patent Application Publication No. 2017-535017

### SUMMARY OF THE INVENTION

### TECHNICAL PROBLEM

However, the problem is, lithium titanate has a low capacity per mass, and the battery capacity of a lithium ion secondary battery to which lithium titanate is applied is poor.

In view of the above problems of the existing technology, an object of the present invention is to provide a negative electrode active material for a lithium ion secondary battery, which provides excellent battery capacity when applied to a lithium ion secondary battery.

### SOLUTION TO THE PROBLEM

In order to solve the above problems, an aspect of the present invention provides a negative electrode active material for a lithium ion secondary battery, the negative electrode active material being represented by a general formula: Li₄Ti₅O₁₂₋ₓMₓ,
where the x satisfies 0<x<12, and the element M is an element having an electronegativity lower than that of oxygen.

### ADVANTAGEOUS EFFECTS OF THE INVENTION

According to one aspect of the present invention, it is possible to provide a negative electrode active material for a lithium ion secondary battery, which provides excellent battery capacity when applied to a lithium ion secondary battery.

### BRIEF DESCRIPTION OF THE DRAWINGS

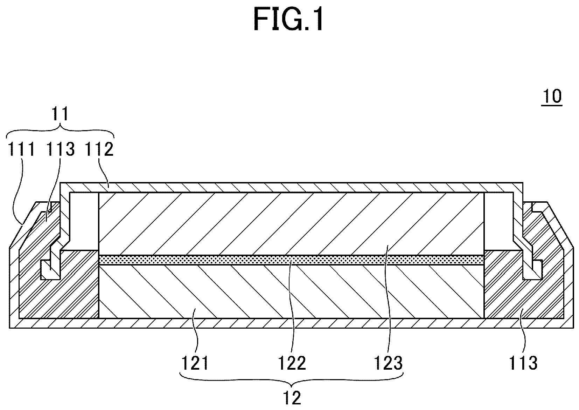

[FIG. 1] FIG. 1 is a diagram of a coin type battery produced in Example 1 and Comparative Example 1.

### DETAILED DESCRIPTION OF THE INVENTION

Embodiments for carrying out the present invention will be described below with reference to the drawings. However, the present invention is not limited to the following embodiments, and various modifications and substitutions are applicable to the following embodiments without departing from the scope of the present invention.

### [Negative electrode active material for lithium ion secondary battery]

A configuration example of the negative electrode active material for a lithium ion secondary battery of the present embodiment will be described below.

The negative electrode active material for a lithium ion secondary battery of the present embodiment (hereinafter, it is also referred to simply as "negative electrode active material") can be represented by the general formula: Li₄Ti₅O₁₂₋ₓMₓ.

In the above general formula, x satisfies 0<x<12, and an element M is an element having an electronegativity lower than that of oxygen.

The negative electrode active material of the present embodiment will be described below.

### (1) Composition

The elements contained in the negative electrode active material of this embodiment and their content ratio will be described below.

### (1-1) Li (lithium) and Ti (titanium)

The inventor of the present invention studied a negative electrode active material that would provide excellent battery capacity when applied to a lithium-ion secondary battery, based on lithium titanate represented by general formula: Li₄Ti₅O₁₂. As a result, the inventor found it possible to solve the above-mentioned problem by replacing part of oxygen with the element M as described later, and completed the present invention.

Therefore, the negative electrode active material of the present embodiment can contain Li and Ti at a molar ratio of Li:Ti = 4:5. Considering the accuracy of the evaluation method and the like, it can be regarded that the value specification is satisfied when each value falls within a measurement error range of ±0.1 from the specified value, i.e., when the ratio of Li is in the range of 3.9 or greater and 4.1 or less and the ratio of Ti is in the range of 4.9 or greater and 5.1 or less.

### (1-2) O (oxygen) and M (element M)

As described above, there has been a problem that a lithium ion secondary battery to which lithium titanate is applied has a low capacity because the capacity of lithium titanate per mass is low. Therefore, the inventor of the present invention studied a method for improving the capacity of a negative electrode active material based on lithium titanate. As a result, the inventor found it possible to lower the potential at which Li ions desorb and to increase the amount of Li ions that can be absorbed and released in, for example, a practical potential range, by replacing part of O with an element having an electronegativity lower than that of O, making it possible to increase the capacity of a lithium ion secondary battery to which the negative electrode active material is applied. The practical potential range may be, for example, 0.5 V or greater and 3.0 V or less (vs. Li/Li⁺).

The element M to be substituted for part of O may be any element that has an electronegativity lower than that of O, and it is more preferable that the element M is one or more selected from, for example, S (sulfur), Cl (chlorine), and N (nitrogen).

The range of x representing the amount by which O is replaced by the element M may be greater than 0 and less than 12 (0<x<12), but it is more preferable that the amount x satisfies 0.1≤x≤2.0. This is because, by setting x, which represents the amount by which O is replaced by the element M, to 0.1 or greater, it is possible to sufficiently lower the potential for Li ion desorption, and to cause the capacity improvement effect to be sufficiently exhibited. In addition, by setting x, which represents the amount by which O is replaced by the element M, to 2.0 or less, it is possible to avoid the oxidoreduction potential being excessively lowered, to avoid precipitation of metal lithium, and the like.

### (2) Crystal Structure

Although the crystal structure of the negative electrode active material of this embodiment is not particularly limited, it is preferable that the negative electrode active material has a rock-salt-type structure, and more preferably a rock-salt-type layer structure. The crystal structure of the negative electrode active material of this embodiment can be a mixed phase of a rock-salt-type structure and a layer structure.

### [Method of manufacturing negative electrode active material]

A configuration example of the method of manufacturing a negative electrode active material of this embodiment will be described below.

According to the method of manufacturing a negative electrode active material of this embodiment, the above-described negative electrode active material can be manufactured. Therefore, description of some of the particulars already described will be omitted.

The method of manufacturing a negative electrode active material of this embodiment can include, for example, a raw material compound preparation step and a heat treatment step described below.

In the raw material compound preparation step, a raw material compound containing lithium (Li), titanium (Ti), and the element M (M) at a molar ratio of Li:Ti:M = 4:5:x (0<x<12) can be prepared. The element M is an element having an electronegativity lower than that of oxygen as described above.

In the heat treatment step, the raw material compound prepared in the raw material compound preparation step can be heat-treated at 600°C or higher under an inert gas atmosphere.

### (1) Raw material compound preparation step

In the raw material compound preparation step, the raw material compound can be prepared such that lithium, titanium, and the element M are adapted to the compositional ratio of the intended negative electrode active material, that is, such that they are at the same compositional ratio as in the general formula described above.

Specifically, in the raw material compound preparation step, as described above, a raw material compound that contains lithium (Li), titanium (Ti), and the element M (M) at a molar ratio of Li:Ti:M = 4:5:x can be prepared.

The molar ratio of Li, Ti, and M can be changed within a range of ±0.1 in accordance with the reaction rate in the heat treatment step, and the like. That is, the ratio of Li can be 3.9 or greater and 4.1 or less, the ratio of Ti can be 4.9 or greater and 5.1 or less, and the ratio of the element M can be x-0.1 or greater and x+0.1 or less. Note that the x indicates the content ratio of the element M in the general formula of the negative electrode active material, and it can be 0<x<12, and preferably 0.1≤x≤2.0.

It is not necessary to prepare a compound individually for each element as a raw material, and a compound containing two or more elements simultaneously can be used as a raw material.

The raw material used for preparing the raw material compound can be one or more selected from, for example, Li₂O, TiO₂, Li₂S, LiCl, Li₃N, and the like.

In the raw material compound preparation step, it is at least necessary to prepare a raw material compound containing the elements at the predetermined ratio specified above. It is preferable to mix and prepare the raw material compound by a milling process from the viewpoint of facilitating the reaction in the heat treatment step.

Although the milling conditions are not particularly limited, for example, the milling process can be carried out in a dry manner with an inert atmosphere in the milling vessel.

During the milling process, the milling conditions can be selected such that sufficient energy is imparted to the raw material compound, to enable uniform mixing and the like.

### (2)Heat treatment step

In the heat treatment step, the raw material compound can be heat-treated at 600°C or higher under an inert gas atmosphere. Although the upper limit of the heat treatment temperature is not particularly limited, the heat treatment temperature is preferably, for example, 1,000°C or lower from the viewpoint of inhibiting formation of byproducts due to decomposition of lithium titanate and the like.

Examples of the inert atmosphere include a noble gas atmosphere and a nitrogen atmosphere.

The heat treatment time in the heat treatment step is not particularly limited and can be selected according to the amount of the raw material compound to be subjected to the heat treatment step and the like, so that the reaction proceeds uniformly.

### [Lithium ion secondary battery]

A lithium ion secondary battery (hereinafter, also referred to as "secondary battery") of this embodiment may include a negative electrode containing the above-described negative electrode active material.

Hereinafter, a configuration example of the secondary battery of this embodiment will be described for each constituent. The secondary battery of this embodiment includes, for example, a positive electrode, a negative electrode, and a nonaqueous electrolyte, and is composed of the same components as those of general lithium-ion secondary batteries. Note that the embodiments described below are only examples, and the lithium-ion secondary battery of this embodiment can be implemented with various modifications and improvements based on the knowledge of a person skilled in the art, including the following embodiments. The use of the secondary battery is not particularly limited.

### (Positive Electrode)

The positive electrode of the secondary battery of this embodiment can include a publicly-known positive electrode active material.

An example of the method for manufacturing the positive electrode will be described below. First, the positive electrode active material (powdered), a conductive material, and a binder are mixed to form a positive electrode mixture. Then, activated carbon, or a solvent for viscosity adjustment may be added as necessary, and the materials may be kneaded. In this way, a positive electrode mixture paste can be produced.

As the positive electrode active material, various publicly-known positive electrode active materials can be used. As the positive electrode active material, for example, LiNiO₂, a positive electrode active material having a layer structure in which Ni (nickel) of LiNiO₂ is replaced with one or more elements selected from Co (cobalt), Al (aluminum), Mn (manganese), and the like, a positive electrode active material having a spinel-type structure, and the like can be used.

Since the mixing ratio of the materials in the positive electrode mixture is a factor that determines the performance of a lithium ion secondary battery, the mixing ratio may be adjusted according to the application. The mixing ratio of the materials can be the same as in the positive electrode of a publicly-known lithium ion secondary battery. For example, when the total mass of solid components in the positive electrode mixture excluding the solvent is regarded as 100% by mass, the positive electrode mixture can contain 60% by mass or greater and 95% by mass or less of the positive electrode active material, 1% by mass or greater and 20% by mass or less of the conductive material, and 1% by mass or greater and 20% by mass or less of the binder.

The obtained positive electrode mixture paste is applied to, for example, a surface of a current collector made of aluminum foil, and dried to evaporate the solvent, to produce a sheet-like positive electrode. If necessary, it can be pressurized by a roll press or the like to increase the electrode density. The sheet-like positive electrode thus obtained can be subjected to cutting or the like to an appropriate size according to the target battery, and used for the manufacture of batteries.

As the conductive material, for example, graphite (natural graphite, artificial graphite, expanded graphite, and the like) and carbon black materials, such as acetylene black and Ketchen black (registered trademark), can be used.

The binder serves to bind active material particles together. As the binder, one or more types selected from polyvinylidene fluoride (PVDF), polytetrafluoroethylene (PTFE), fluororubber, ethylene propylene diene rubber, styrene butadiene, cellulosic resin, polyacrylic acid and the like can be used.

If necessary, a solvent for dispersing the positive electrode active material, the conductive material and the like and dissolving the binder can be added to the positive electrode mixture. Specifically, an organic solvent, such as N-methyl-2-pyrrolidone, can be used as the solvent. Activated carbon can be added to the positive electrode mixture in order to increase the electric double layer capacity.

The method for manufacturing the positive electrode is not limited to the example described above, and other methods may be used. For example, the positive electrode can be manufactured by, for example, press-molding a positive electrode mixture and then drying it in a vacuum atmosphere.

### (Negative electrode)

The negative electrode may be formed by applying a negative electrode mixture, which is obtained by mixing the negative electrode active material described above with a binder and adding an appropriate solvent to make a paste, to a surface of a metal foil current collector such as copper, drying the negative electrode mixture, and compressing it as necessary to increase the electrode density.

A fluorine-containing resin, such as PVDF, can be used as the binder used in the negative electrode as in the case of the positive electrode. As the organic solvent in which the negative electrode active material and the binder are dispersed, an organic solvent, such as N-methyl-2-pyrrolidone, can be used.

The negative electrode may be manufactured in the same manner as for the positive electrode except that a negative electrode active material is used instead of the positive electrode active material.

### (Separator)

A separator can be inserted between the positive electrode and the negative electrode as needed. The separator separates the positive electrode and the negative electrode, and retains an electrolyte. A publicly-known separator can be used. For example, a thin film, such as polyethylene or polypropylene with many micropores, can be used.

### (Nonaqueous Electrolyte)

As the nonaqueous electrolyte, for example, a nonaqueous electrolytic solution can be used.

As the nonaqueous electrolytic solution, for example, a lithium salt as a supporting salt (supporting electrolyte) dissolved in an organic solvent can be used. As the nonaqueous electrolytic solution, a lithium salt dissolved in an ionic liquid can be used. The ionic liquid refers to a salt that is composed of a cation other than lithium ion and an anion, and is liquid even at room temperature.

As the organic solvent, one type selected from cyclic carbonates, such as ethylene carbonate, propylene carbonate, butylene carbonate, trifluoropropylene carbonate, and the like, chain carbonates, such as diethyl carbonate, dimethyl carbonate, ethyl methyl carbonate, dipropyl carbonate, and the like, ether compounds, such as tetrahydrofuran, 2-methyltetrahydrofuran, dimethoxyethane, and the like, sulfur compounds, such as ethyl methyl sulfone, butane sultone, and the like, and phosphorus compounds such as triethyl phosphate, trioctyl phosphate, and the like can be used alone, or two or more types of them may be mixed.

As the supporting salt, LiPF₆, LiBF₄, LiClO₄ LiAsF₆, LiN(CF₃SO₂)₂, and their complex salts, and the like can be used. The nonaqueous electrolytic solution may contain a radical scavenger, a surfactant, a flame retardant, or the like.

A solid electrolyte may be used as the nonaqueous electrolyte. The solid electrolyte has properties that can withstand high voltage. Examples of the solid electrolyte include inorganic solid electrolytes and organic solid electrolytes.

Examples of the inorganic solid electrolytes include oxide-based solid electrolytes, sulfide-based solid electrolytes, and the like.

The oxide-based solid electrolytes are not particularly limited, and, for example, those containing oxygen (O) and having lithium ion conductivity and an electronic insulation property can be suitably used. As the oxide-based solid electrolyte, one or more types selected from, for example, lithium phosphate (Li₃PO₄), Li₃PO₄Nₓ, LiBO₂N_{X}, LiNbO₃, LiTaO₃, Li₂SiO₃, Li₄SiO₄-Li₃PO₄, Li₄SiO₄-Li₃VO₄, Li₂O-B₂O₃-P₂O₅, Li₂O-SiO₂, Li₂O-B₂O₃-ZnO, Li_{1+X}AlxTi_{2-X}(PO₄)₃ (0≤X≤1), Li_{1+X}Al_{X}Ge_{2-X}(PO₄)₃ (0≤X≤1), LiTi₂(PO₄)₃, Li_{3X}La_{2/3-X}TiO₃ (0≤X≤2/3), Li₅La₃Ta₂O₁₂, Li₇La₃Zr₂O₁₂, Li₆BaLa₂Ta₂O₁₂, Li_{3.6}Si_{0.6}P_{0.4}O₄, and the like can be used.

The sulfide-based solid electrolyte is not particularly limited, and, for example, those containing sulfur (S) and having lithium ion conductivity and an electronic insulation property can be suitably used. As the sulfide-based solid electrolyte, for example, one or more types selected from Li₂S-P₂S₅, Li₂S-SiS₂, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, LiPO₄-Li₂S-SiS, LiI-Li₂S-P₂O₅, LiI-Li₃PO₄-P₂S₅, and the like can be used.

The inorganic solid electrolyte may be other than those described above, and may be, for example, Li₃N, LiI, Li₃N-LiI-LiOH, and the like.

The organic solid electrolyte is not particularly limited as long as it is a polymer compound exhibiting ionic conductivity. For example, polyethylene oxide, polypropylene oxide, and copolymers thereof may be used. The organic solid electrolyte may contain a supporting salt (lithium salt).

### (Shape and configuration of secondary battery)

The lithium-ion secondary battery of this embodiment described above may have various shapes, such as cylindrical shape, a laminated shape, and the like. Regardless of the shape, in a case where the secondary battery of this embodiment uses a nonaqueous electrolytic solution as the nonaqueous electrolyte, the positive electrode and the negative electrode can be laminated via the separator to form an electrode body, and the obtained electrode body can be impregnated with the nonaqueous electrolytic solution. Then, a current collecting lead or the like may be used to connect the positive electrode collector to a positive electrode terminal leading to the outside, and the negative electrode collector to a negative electrode terminal leading to the outside, and the structure can be sealed in a battery case.

As described above, the secondary battery of this embodiment is not limited to the form in which a nonaqueous electrolytic solution is used as the nonaqueous electrolyte. For example, it may be a secondary battery using a solid nonaqueous electrolyte, that is, may be an all-solid-state battery. In the case of an all-solid-state battery, the configurational particulars other than the negative electrode active material can be changed as necessary.

### [Examples]

The present invention will be described in more detail below with reference to examples and comparative examples of the present invention, but the present invention is not limited in any way by these examples.

### (Method for evaluating negative electrode active material)

The composition of the negative electrode active material was evaluated by an analysis using an ICP emission spectrometer (obtained from VARIAN Inc., 725ES).

The oxygen content in the negative electrode active material was evaluated by the non-dispersive infrared absorption method using an oxygen/nitrogen/hydrogen analyzer (obtained from LECO Japan Corporation, ONH836).

### (Method for evaluating lithium-ion secondary battery)

The performance of the produced lithium-ion secondary battery was evaluated as follows.

The coin-type battery produced in each Example and Comparative Example was left to stand for approximately 12 hours after being produced. After the open circuit voltage OCV stabilized, the battery was charged to a cutoff voltage of 0.5 V such that the current density to the positive electrode was 0.1 mA/cm², and after 1 hour of resting, discharged to a cutoff voltage of 3.0 V. The capacity at this moment was determined as the discharge capacity.

### [Example 1]

### (Negative electrode active material)

The negative electrode active material was prepared by the following procedure.

### (1) Raw material compound preparation step

Li₂O, TiO₂, and Li₂S were weighed out such that when mixed, Li, Ti, and S contained in the mixture would be at a molar ratio of Li:Ti:S = 4:5:0.6.

The weighed-out raw materials together with a zirconia ball were added into a zirconia milling vessel, and the vessel was internally purged with Ar gas. Then, milling was performed with a planetary ball mill, to prepare a raw material compound.

As a result of a compositional analysis of the obtained raw material compound, it was confirmed that Li₄Ti₅O_{11.4}S_{0.6} was obtained. Moreover, from the diffraction pattern of powder X-ray diffractometry, it was confirmed that the raw material compound had a rock-salt-type structure.

### (2)Heat treatment step

The raw material compound obtained in the raw material compound preparation step was heat-treated at 800°C under an argon atmosphere for 6 hours, to obtain a negative electrode active material. As a result of a compositional analysis of the obtained negative electrode active material, it was confirmed that Li₄Ti₅O_{11.4}S_{0.6} was obtained.

### (Coin-type Battery)

A lithium-ion secondary battery was manufactured using the obtained negative electrode active material, and the charge-discharge capacity was measured.

As shown in FIG. 1, the coin-type battery 10 is composed of a case 11 and an electrode 12 housed in the case 11.

The case 11 has a hollow positive electrode can 111 with its one end open, and a negative electrode can 112 disposed in the opening of the positive electrode can 111. When the negative electrode can 112 is disposed in the opening of the positive electrode can 111, a space for housing the electrode 12 is formed between the negative electrode can 112 and the positive electrode can 111.

The electrode 12 is composed of a positive electrode 121, a separator 122, and a negative electrode 123, which are stacked in this order. They are housed in the case 11 such that the positive electrode 121 contacts an inner surface of the positive electrode can 111 and the negative electrode 123 contacts an inner surface of the negative electrode can 112.

The case 11 includes a gasket 113. The gasket 113 restricts the relative movement of the positive electrode can 111 and the negative electrode can 112 and fixes them so as to maintain them in a non-contact state, that is, an electrically insulated state. The gasket 113 also has a function of sealing the gap between the positive electrode can 111 and the negative electrode can 112 and airtightly and liquid-tightly shutting off the inside of the case 11 from the outside.

The coin-type battery 10 was produced as follows. First, 52.5 milligrams (mg) of the obtained negative electrode active material, 15 mg of acetylene black, and 7.5 mg of polytetrafluoroethylene (PTFE) resin were mixed.
Next, the mixture was pelletized to a weight of approximately 75 mg at a diameter of 11 mm, to manufacture the negative electrode 123, which was dried in a vacuum dryer at 100°C for 12 hours.

Using the negative electrode 123, the positive electrode 121, the separator 122, and the electrolytic solution, the coin-type battery 10 was manufactured in an Ar atmosphere glove box with a dew point controlled to -60°C.

As the positive electrode 121, lithium metal punched into a disk shape having a diameter of 13 mm was used.

As the separator 122, a polyethylene porous membrane having a film thickness of 25 µm was used. As the electrolytic solution, a liquid (obtained from Tomiyama Pure Chemical Industries, Ltd.) in which ethylene carbonate (EC) and dimethyl carbonate (DMC) were mixed at 4:6 and 1M LiPF₆ was added as a supporting electrolyte was used.

Using the manufactured coin-type battery equipped with the negative electrode containing the negative electrode active material, the discharge capacity specified above was measured, and was confirmed to be 172.7 mAh/g.

### [Comparative Example 1]

A negative electrode active material and a coin-type battery were manufactured in the same manner as in Example 1 except that the raw material compound was prepared by weighing out Li₂O and TiO₂ such that when they would be mixed, Li and Ti contained in the mixture would be at a molar ratio of Li:Ti = 4:5. Then, the negative electrode active material and the coin-type battery were evaluated.

As a result of a compositional analysis of the obtained negative electrode active material, it was confirmed that Li₄Ti₅O₁₂ was obtained.

Using the manufactured coin-type battery equipped with the negative electrode containing the negative electrode active material, the discharge capacity specified above was measured, and was confirmed to be 150.3 mAh/g.

From the above results, it was confirmed that the negative electrode active material obtained in Example 1 better improved the battery capacity than did the negative electrode active material of Comparative Example 1 when applied to a lithium-ion secondary battery, and was superior.

This application claims priority based on Japanese Patent Application No. 2022-120914 filed with the Japan Patent Office on July 28, 2022, and the entire contents of Japanese Patent Application No. 2022-120914 are incorporated in this international application.

## Claims

1. A negative electrode active material for a lithium ion secondary battery,
the negative electrode active material being represented by a general formula: Li₄Ti₅O₁₂₋ₓMₓ, where the x satisfies 0<x<12, and the element M is an element having an electronegativity lower than that of oxygen.

2. The negative electrode active material for a lithium ion secondary battery according to claim 1,
wherein the element M is one or more selected from S, Cl, and N.

3. The negative electrode active material for a lithium ion secondary battery according to claim 1 or 2,
wherein the x satisfies 0.1≤x≤2.0.

4. A method of manufacturing a negative electrode active material for a lithium ion secondary battery, the method comprising:
a raw material compound preparation step of preparing a raw material compound containing lithium (Li), titanium (Ti), and an element M (M) at a molar ratio of Li:Ti:M = 4:5:x; and
a heat treatment step of heat-treating the raw material compound at 600°C or higher under an inert gas atmosphere,
wherein the x satisfies 0<x<12 and the element M is an element having an electronegativity lower than that of oxygen.

5. A lithium-ion secondary battery, comprising:
a negative electrode containing the negative electrode active material for a lithium ion secondary battery of claim 1 or 2.
